(19) Europäisches Patentamt
European Patent Office
Office européen des brevets

(11) **EP 1 879 289 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
***H02P 23/12*** (2006.01)      ***H02P 7/28*** (2006.01)

(21) Anmeldenummer: **07109083.1**

(22) Anmeldetag: **29.05.2007**

(54) **Drehwinkelbestimmung eines Elektromotors**

Determination of the angle of rotation of an electric motor

Détermination de l'angle de rotation d'un moteur électrique

(84) Benannte Vertragsstaaten:
**DE ES FR GB IT**

(30) Priorität: **12.07.2006 DE 102006032192**

(43) Veröffentlichungstag der Anmeldung:
**16.01.2008 Patentblatt 2008/03**

(73) Patentinhaber: **ROBERT BOSCH GMBH**
**70442 Stuttgart (DE)**

(72) Erfinder:
• **Brosche, Thomas**
  **70195 Stuttgart (DE)**
• **Heimburger, Stefan**
  **77731 Willstaett-Legelshurst (DE)**
• **Krueger, Hartmut**
  **77830 Buehlertal (DE)**
• **Selinger, Joachim**
  **70597 Stuttgart (DE)**
• **Bitzer, Matthias**
  **70569 Stuttgart (DE)**

(56) Entgegenhaltungen:
**EP-A- 1 659 683       WO-A-2006/069635**
**DE-A1- 10 359 195**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft ein Verfahren und eine Vorrichtung zur Bestimmung eines Drehwinkels eines Elektromotors.

Offenbarung der Erfindung

Zur Positionsbestimmung von mechanisch kommutierten Gleichstrommotoren werden in der Regel Hallsensoren eingesetzt. Andere Verfahren basieren auf einer Zählung der durch den mechanischen Kommutierungsvorgang im Motorstromsignal entstehenden Ripple. Solche Ripple-Counter-Verfahren sind z.B. in der DE 100 28 033, der DE 100 28 035 bis DE 100 28 041 und in der US 20030111996 beschrieben. Hierbei werden die kommutierungsbedingten Ripple durch Filterung (Hochpass, Tiefpass, Bandpass) vor der eigentlichen Zählung bestmöglich vom Stromsignal getrennt.

In der DE 197 29 238 C1 wird ein Verfahren vorgeschlagen, das mit Hilfe eines Motorzustandsmodells, eines Ripple-Detektors und einer nachgeschalteten Auswerteeinheit die Motordrehzahl und daraus die Motor- bzw. Aktuatorposition ermittelt. Die Drehzahl wird hierbei aus dem zeitlichen Abstand der erkannten Kommutierungsvorgänge bestimmt und mit der anhand des Motorzustandsmodells geschätzten Drehzahl verglichen. Die Auswerteeinheit ermittelt dann den jeweils wahrscheinlicheren Drehzahlwert und aus dem Drehzahlwert durch Integration über die Messzeit den Drehwinkel.

Aus der DE 199 25 327 A1 ist ein Verfahren zum elektronischen Überwachen und Steuern eines Prozesses zum Verstellen beweglicher Teile, insbesondere von Fenstern und Schiebedächern eines Kraftfahrzeugs, zur Gewährleistung eines Einklemmschutzes bekannt. Dieses weist mindestens die folgenden Schritte auf: Zuführen von für den Prozess charakteristischen Eingangs- und Ausgangsgrößen zu einer Erkennungseinrichtung, Auffinden und Optimieren von typischen Prozessgrößen eines in der Erkennungseinrichtung abgelegten und den Prozess beschreibenden Modells, Bewerten der typischen Parameter durch Vergleich mit in der Erkennungseinrichtung abgelegten Prozessgrößen, Ermitteln einer Korrekturgröße fur den Prozess in Abhängigkeit des Vergleichs, und Beeinflussen des Prozesses durch Zuführen der ermittelten Korrekturgröße zu dem Prozess.

Die WO2006/069635 offenbart ein Verfahren zum Ermitteln der Position einer von einem Elektromotor betriebenen Stelleinheit, bei dem eine Motordrehzahl aus einem Motormodell bestimmt wird, die Drehzahl über einen Zeitraum integriert wird und die Position der Stelleinheit durch Multiplikation des Ergebnisses der Integration mit einem Proportionalitätsfaktor bestimmt wird. Im Abschaltzeitpunkt berücksichtigt das Motormodell ein Nachlaufen des Elektromotors.

Die EP 1 659 683 A1 offenbart ein Verfahren zum Ermitteln eines durch einen Kommutierungsvorgang hervorgerufenen Wechselanteils eines Stroms eines Gleichstrommotors, wobei das Verfahren ein Messen des Stroms, ein Schätzen eines Gleichstromanteils des Stroms und ein Ermitteln einer Differenz aus geschätztem Gleichstromanteil und gemessenem Strom umfasst.

Des weiteren sind aus der Regelungstechnik und der Systemtheorie modellgestützte Zustandsschätzverfahren bekannt, mit denen die Zustände des dynamischen Modells einer Regelstrecke (z.B. DC-Motor) geschätzt werden können. So betrifft die WO 2006/069635 A3 ein Verfahren zum Ermitteln der Position einer von einem Elektromotor betriebenen Stelleinheit, bei dem eine Motordrehzahl aus einem Motormodell bestimmt wird, die Drehzahl über einen Zeitraum integriert wird und die Position der Stelleinheit durch Multiplikation des Ergebnisses der Integration mit einem Proportionalitätsfaktor bestimmt wird. Im Abschaltzeitpunkt berücksichtigt das Motormodell ein Nachlaufen des Elektromotors. Derartige Verfahren werden als Beobachter (Zustands- bzw. Luenberger-Beobachter) oder Filter (Kalman-Filter) bezeichnet.

Es ist daher die der vorliegenden Erfindung zugrunde liegende Aufgabe, die Drehwinkelposition eines Elektromotors anhand von Messwerten für das Motorstromsignal, d.h. einem Ankerstrom, und/oder das Motorspannungssignal, d.h. einer Klemmenspannung, genauer zu bestimmen bzw. eine anhand vom Motorstromsignal und/oder Motorspannungssignal erfolgte Bestimmung der Drehwinkelposition des Elektromotors zu korrigieren und/oder zu initialisieren.

Das erfindungsgemäße Verfahren zur Bestimmung eines Drehwinkels eines Elektromotors erfolgt durch die Bestimmung eines Rückdrehwinkels des Elektromotors nach dessen Abschalten anhand eines Motorstromsignals und eines Motorspannungssignals mit den Schritten:

- Detektieren eines zweiten Nulldurchgangs des Motorstromsignals nach dem Abschalten des Elektromotors, und
- Bestimmen des Rückdrehwinkels durch eine modellbasierte Auswertung des Motorstromsignals und des Motorspannungssignals, wobei ein Beginn des Rückdrehens nach dem zweiten Nulldurchgang des Motorstromsignals nach dem Abschalten des Elektromotors definiert ist.

Die erfindungsgemäße Vorrichtung zur Bestimmung eines Drehwinkels eines Elektromotors, weist entsprechend auf

- eine Messlogik zum Detektieren eines zweiten Nulldurchgangs des Motorstromsignals und des Motorspannungssignals nach dem Abschalten des Elektromotors, und
- einen Beobachter zum Bestimmen des Rückdrehwinkels durch eine modellbasierte Auswertung des Motorstromsignals und des Motorspannungssignals, wobei ein Beginn des Rückdrehens nach dem zweiten Nulldurchgang des Motorstromsignals nach dem Abschalten des Elektromotors definiert ist.

In bekannten Verfahren zur Drehwinkelbestimmung wird eine Winkelbestimmung durch Auswertung der Kommutierungsvorgänge im Stromsignal durchgeführt. Typischerweise lassen sich diese Kommutierungsvorgänge nur für einen Motorbetrieb mit größeren Drehzahlen aus dem Stromsignal extrahieren und sind bei sehr langsamen Drehzahlen sehr schlecht bzw. gar nicht im Signal des Ankerstroms nachweisbar.

Das Rückdrehverhalten der Gleichstrommotoren ist durch langsame und kriechende Drehbewegungen gekennzeichnet. Die beschriebene Problematik hinsichtlich der Auswertung der Kommutierungsvorgänge tritt in dem erfindungsgemäßen Verfahren und der erfindungsgemäßen Vorrichtung nicht auf, da diese auf einem modellbasierten Schätzverfahren beruhen und daher während des Motorzustands Rückdrehen nicht auf die Detektion der im Stromsignal auftretenden Kommutierungsvorgänge angewiesen sind. Außerdem ist das Rückdrehen des Motors durch zwei Nulldurchgänge und Vorzeichenwechsel des Stromsignals nach dem Abschalten gekennzeichnet, d.h., ein Rückdrehen des Motors findet nur dann statt, wenn ein zweiter Nulldurchgang im Stromsignal auftritt.

Das erfindungsgemäße Verfahren und die erfindungsgemäße Vorrichtung detektieren diesen Nulldurchgang des Stromsignals und beginnen nach Erkennung mit der Schätzung des Rückdrehwinkels. Der erfindungsgemäße Algorithmus erlaubt eine hochgenaue Bestimmung des Rückdrehwinkels durch eine modellbasierte Auswertung des Strom- und des Spannungssignals des Motors. Dadurch werden die Genauigkeit und die Robustheit einer sensorlosen Positionsschätzung (SLC-Verfahren) deutlich verbessert. Für die Ermittlung des Rückdrehwinkels ist keine Auswertung der Kommutierungsripple notwendig. Durch die Bestimmung des Rückdrehwinkels lassen sich nach dem Abschalten des Motors auftretende Rückdreheffekte (aufgrund von z.B. mechanischen Verspannungen in vom Motor angetriebenen Wellen, Getrieben oder anderen Strukturen) berechnen und damit kann insbesondere auch bei sensorreduzierten Verfahren zur Drehwinkelbestimmung eine genauere Positionsbestimmung durchgeführt werden.

Für die Bestimmung des Rückdrehwinkels sind keine zusätzlichen Winkelsensoren incl. Kabel, Stecker und Hardware für die Signalauswertung notwendig. Dadurch wird eine Reduktion der Systemkosten, wie bei SLC-Verfahren vorgesehen, möglich.

Die Unteransprüche zeigen bevorzugte Weiterbildungen der Erfindung.

Der Rückdrehwinkel wird nach der Erfindung vorzugsweise mittels eines Motormodells und/oder Störgrößenmodells aus dem Motorstromsignal und dem Motorspannungssignal ermittelt. Das Motormodell und/oder Störgrößenmodell sind vorzugsweise in den Simulatorteil eines Beobachters integriert und werden über dessen Beobachterfunktion, den sogenannten Korrekturterm, optimiert.

Erfindungsgemäß sind in das Motormodell und/oder in das Störgrößenmodell vorzugsweise ein von dem Elektromotor angetriebenes Getriebe und daran angrenzende Anwendungen einbezogen.

Erfindungsgemäß wird zur Bestimmung des Rückdrehwinkels vorzugsweise ein Messmodell für eine Messvorrichtung für das Motorstromsignal und das Motorspannungssignal einbezogen. Dies ist bei der erfindungsgemäßen Vorrichtung ebenfalls vorzugsweise in den Beobachter integriert.

Nach der Erfindung wird das Bestimmen des Rückdrehwinkels vorzugsweise gestartet, nachdem der Elektromotor abgeschaltet wurde. Hier weist die erfindungsgemäße Vorrichtung vorzugsweise eine Detektiereinheit zur Bestimmung eines Abschaltens des Elektromotors und zum anschließenden Starten der Bestimmung des Rückdrehwinkels auf.

Das Verfahren und die Vorrichtung nach der Erfindung werden vorzugsweise verwendet, um einen durch Signalauswertung der mechanischen Kommutierungsvorgänge im Motorstromsignal bestimmten Motordrehwinkel des Elektromotors für den Fall des Auftretens von Rückdrehphänomenen diese zu detektieren und den Drehwinkel entsprechend des tatsächlichen Rückdrehwinkels zu korrigieren und/oder zu initialisieren.

Das erfindungsgemäße Verfahren und die erfindungsgemäße Vorrichtung sind vorzugsweise in Sitzsteuergeräten für Autositze oder in Steuergeräten für Schiebedächer, Fensterheber oder Klappensteller integriert.

Kurze Beschreibung der Zeichnung(en)

Weitere Vorteile der Erfindung ergeben sich aus der folgenden Zeichnungsbeschreibung. In den Zeichnungen sind Ausführungsbeispiele der Erfindung beispielhaft dargestellt. Die Zeichnungen, die Beschreibung und die Ansprüche enthalten zahlreiche Merkmale in Kombination oder als bevorzugtes Ausführungsbeispiel der Erfindung bezeichnet. Der Fachmann wird die Merkmale zweckmäßigerweise auch einzeln betrachten und/oder zur sinnvollen weiteren Kombination zusammenfassen.

Es zeigen:

Figur 1 einen grundsätzlichen Aufbau einer bevorzugten Ausführungsform der Vorrichtung des Verfahrens nach der Erfindung,

Figur 2 eine Struktur des erfindungsgemäßen Beobachter-Entwurfsmodells mit Motor- und Störgrößenmodell,

Figur 3 ein Blockdiagramm für die grundsätzliche Struktur des modellbasierten Schätzverfahrens (Beobachter- oder Filteralgorithmus) zur Bestimmung des Rückdrehwinkels nach der Erfindung, und

Figur 4 einen Vergleich von gemessenem und geschätztem Stromsignal sowie einen Vergleich von gemessenem und rekonstruiertem normiertem Rückdrehwinkel.

Ausführungsform(en) der Erfindung

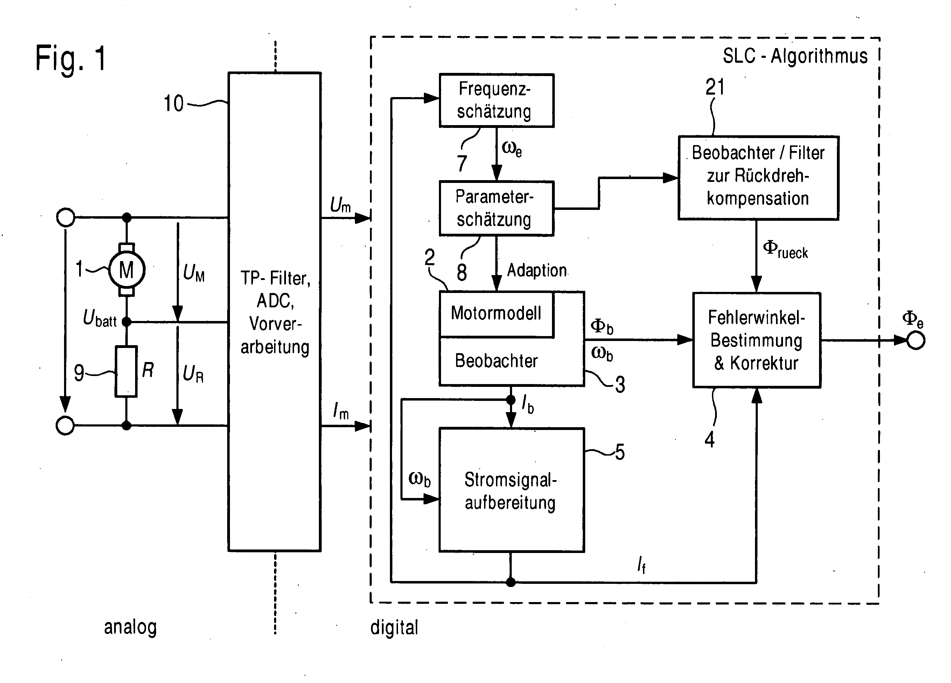

In Figur 1 ist der grundsätzliche Aufbau einer bevorzugten Ausführungsform des erfindungsgemäßen Systems dargestellt. Das System basiert auf der Messung der über den Motor abfallenden Spannung (Klemmenspannung) sowie des im Motor fließenden Stroms (Ankerstrom). Dazu werden am Motor 1 die Klemmenspannung $U_M$ und die über einen zum Motor 1 in Reihe geschalteten Shunt-Widerstand 9 abfallende Spannung $U_R$ gemessen. Die Versorgungsspannung für den Motor $U_{batt}$ liegt über der Reihenschaltung aus Motor 1 und Shunt-Widerstand 9 an. Die analoge Klemmenspannung $U_M$ und die über den Shunt-Widerstand 9 abfallende Spannung $U_R$ werden in einer Erfassungseinheit 10 verstärkt, tiefpassgefiltert (Anti-Aliasing-Filter), digitalisiert (A/D-Wandlung) und in einer Vorverarbeitung in die digitalisierten Signale Klemmenspannung $U_m$ sowie Ankerstrom $I_m$ umgesetzt.

Nachfolgend werden dann die digitalisierten Signale Klemmenspannung $U_m$ und Ankerstrom $I_m$ mit Hilfe des erfindungsgemäßen Systems ausgewertet und hierdurch der gesuchte Motordrehwinkel $\Phi_e$ bestimmt. Das erfindungsgemäße System kann z.B. durch ein µC oder eine geeignete spezifische Hardware (FPGA, ASIC, etc.), wie auch einen diskreten Aufbau realisiert werden. In Figur 1 ist beispielshaft die Beschaltung des Motors bei Nutzung nur eines Shunt-Widerstands 9 ohne den für die Ansteuerung des Motors 1 notwendigen Schalter (Relais, Transistor, etc.) dargestellt. Eine Beschaltung mit Hilfe von zwei, jeweils an der unteren und der oberen Motorklemme angebrachten mit dem Motor 1 in Reihe geschalteten Shunt-Widerständen (nicht dargestellt), ist ebenfalls möglich, jedoch nicht wesentlich für das erfindungsgemäße System.

Die in der Figur 1 gezeigte bevorzugte Ausführungsform des erfindungsgemäßen Systems zur Bestimmung des gesuchten Motordrehwinkels $\Phi_e$ besteht im Wesentlichen aus einem Beobachter 3 und einer Fehlerwinkelbestimmung 4. Der Beobachter 3 beinhaltet ein Motormodell 2, dessen Parameter, z.B. Induktivität, Widerstand, Motorkonstante, Reibung und Getriebeelastizitäten, anhand der digitalisierten Motorspannung $U_m$ und des digitalisierten Motorstroms $I_m$ und ggf. einer geschätzten Kreisfrequenz $\omega_e$ durch eine Parameterschätzung 8 ermittelt werden. Mit Hilfe des Beobachters 3 werden nun die Zustände des Motors 1, z.B. Strom $I_b$, Drehfrequenz $\omega_b$ und der Drehwinkel $\Phi_b$ und ggf. auch das Lastmoment $M_L$ und weitere applikationsspezifische Zustände geschätzt. Bei ausreichend hoher Genauigkeit des Motormodells 2 bzw. der geschätzten Parameter sowie der Kenntnis aller Eingangsgrößen kann der Beobachter 3 auch als reiner Simulator, d.h., nur mit dem Motormodell 2 ohne aufgeschaltete Korrekturfunktion des Beobachters 3, betrieben werden. Da eine solche Schätzung der Zustände des Motors und weiterer applikationsspezifischer Zustände allgemein in der Fachliteratur, z.B. O. Föllinger: Regelungstechnik: Einführung in die Methoden und ihrer Anwendung, 8. Auflage, Hüthig GmbH, Heidelberg, 1994, und H. Unbehauen, Regelungstechnik, Band 1: Klassische Verfahren zur Analyse und Synthese linearer kontinuierlicher Regelsysteme, Fuzzy-Regelsysteme, 12. Auflage, Vieweg, 2002, wie auch in der DE 197 29 238 C1 zu finden sind, werden diese hier nicht näher beschrieben. Als Rückführgrößen für den Beobachter können hierbei eine oder mehrere der Zustandsgrößen digitalisierter (gemessener) Motorstrom $I_m$, geschätzte Frequenz $\omega_e$ und geschätzter Winkel $\Phi_e$ verwendet werden.

In einer Stromsignalaufbereitungseinheit 5 wird über geeignete Filterverfahren das Stromripplesignal $I_f$ extrahiert.

Mit Hilfe des gefilterten Stromripplesignals $I_f$ wird nun sowohl eine Frequenzschätzung mittels einer Frequenzschätzungseinheit 7 vorgenommen, die wiederum als Eingabesignal für die mittels der Parameter-Schätzeinheit 8 durchgeführten Parameterschätzung dient, als auch eine Fehlerwinkelbestimmung in der Vergleichereinheit 4 durchgeführt. Mit Hilfe der Fehlerwinkelbestimmung soll der Fehler $\Delta\Phi_b = \Phi_b - \Phi$ des durch den Beobachter geschätzten Motordrehwinkels $\Phi_b$, d.h., die Abweichung zwischen dem durch das Motormodell 2 geschätzten Motordrehwinkel $\Phi_b$, und dem tatsächlichen Motordrehwinkel $\Phi$ ermittelt und nachfolgend korrigiert werden. Dazu wird die Phasenlage der durch die mechanischen Kommutierungsvorgänge hervorgerufenen Stromripple ausgewertet. Die Vergleichereinheit gibt dann den korrigierten geschätzten Winkel $\Phi_e$ aus. Die Vergleichereinheit 4 erhält zur Korrektur und/oder Initialisierung des geschätzten Winkels $\Phi_e$ auch den nach der Erfindung von einem zweiten Beobachter/Filter 21 bestimmten Rückdrehwinkel $\Phi_{rueck}$.

Zur Bestimmung des Rückdrehwinkels eines DC-Motors wird ein modellbasiertes Schätzverfahren benutzt. Hierzu können entweder Beobachter- (z.B. Zustandsbeobachter mit Luenberger-Struktur) oder alternativ Filter-Verfahren (z.B. Kalman-Filter) eingesetzt werden. Beide genannten Verfahrensvarianten bestehen aus einem Simulatorteil und einem Korrekturterm. Für den Simulatorteil wird ein dynamisches Modell der (Regel-)Strecke, d.h., des DC-Motors, angesetzt. Der Korrekturterm besteht aus einem Vergleich der Messgrößen Strom und Spannung mit den entsprechenden (mit Hilfe des modellbasierten Schätzverfahrens) rekonstruierten Größen. Dieser ständige Abgleich zwischen Mess- und Schätzgrößen erlaubt die hochgenaue Bestimmung des Rückdrehwinkels.

Das dynamische Modell eines DC-Motors kann durch ein System von konzentrierten Differentialgleichungen in folgender Form dargestellt werden:

Differentialgleichungen:

$$\dot{x} = f(x,z,u), \quad t > 0,$$

Anfangsbedingungen:

$$x(0) = x_0,$$

mit dem Zustandsvektor $\mathbf{x}$ der Modellgrößen, den Anfangswerten $\mathbf{x_0}$ des Zustandsvektors, dem Vektor $\mathbf{u}$ der Eingangsgrößen und dem Vektor $\mathbf{z}$ der unbekannten Störgrößen. Beispielsweise wird das am Motor angreifende Lastmoment in der erfindungsgemäßen Vorrichtung nicht gemessen und daher als Störgröße interpretiert.

Die Messgrößen werden durch die Messgleichung

Differentialgleichungen:

$$y_{mess} = h(x), \quad t \geq 0,$$

die ein Modell für die Messvorrichtung darstellt, beschrieben. Das angreifende Lastmoment sowie weitere gegebenenfalls auftretende Störgrößen, werden mit Hilfe eines dynamischen Störgrößenmodells, d.h., einem Differentialgleichungssystem der Form

Differentialgleichungen:

$$\dot{z} = g(x,z), \quad t > 0,$$

Anfangsbedingungen:

$$z(t=0) = z_0$$

modelliert. Als Gesamtmodell, d.h., DC-Motormodell, kombiniert mit Störgrößenmodell, erhält man damit ein Modell der Form:

Differentialgleichungen:

$$\begin{bmatrix} \dot{x} \\ \dot{z} \end{bmatrix} = \begin{bmatrix} f(x,z,u) \\ g(x,z) \end{bmatrix}, \quad t > 0 \qquad\qquad (*)$$

Anfangsbedingungen:

$$\begin{bmatrix} x(0) \\ z(0) \end{bmatrix} = \begin{bmatrix} x_0 \\ z_0 \end{bmatrix},$$

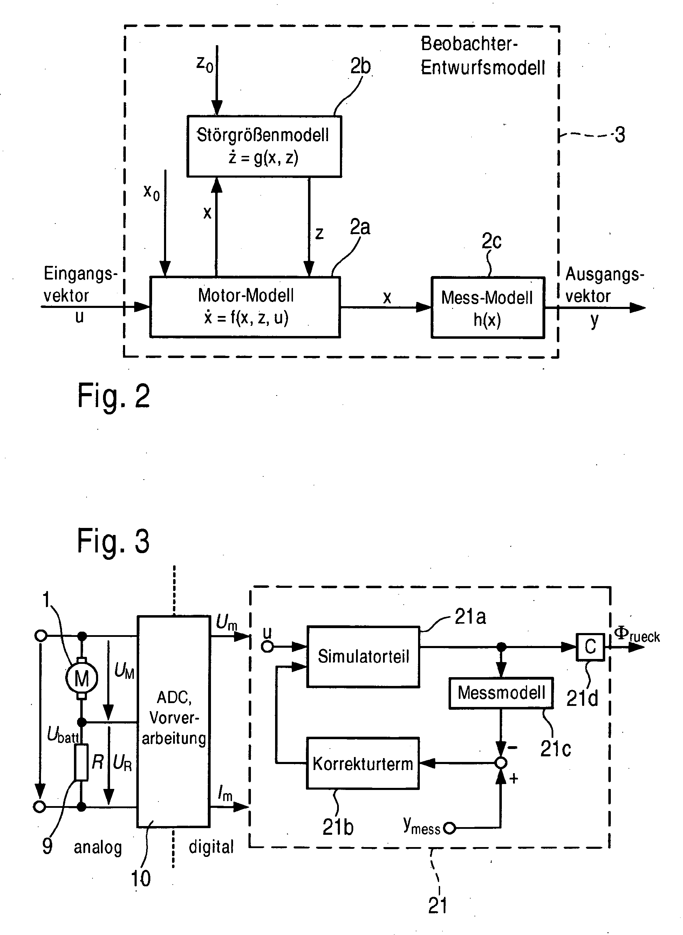

das als Beobachter-Entwurfsmodell, vgl. Figur 2, benutzt wird. In das Motor- sowie in das verwendete Störgrößenmodell werden gegebenenfalls auch das mit Hilfe des Motors angetriebene Getriebe und daran angrenzende Anwendungen einbezogen.

Der modellbasierte Schätzalgorithmus (Beobachter oder Filter 21) wird mit Hilfe des Beobachter-Entwurfsmodells (\*) entworfen. Der Algorithmus zur Bestimmung des Rückdrehwinkels ist ein dynamischer Schätzalgorithmus und hat die prinzipielle Form

$$\text{Differentialgleichung:} \quad \dot{\xi}(t) = \eta(\xi(t,u)) + K(y_{mess}(t) - y_{Beo}(t)), \quad t > 0$$
$$\text{Anfangsbedingung:} \quad \xi(0) = \xi_0, \qquad\qquad\qquad (\ast\ast)$$
$$\text{Messgleichung:} \quad y_{Beo}(t) = h_{Beo}(\xi(t)), \quad t \geq 0$$

mit dem Simulatorteil $\xi = \eta(\xi, u)$ und dem Korrekturterm $K(y_{meee} - y_{Beo})$ 21b sowie mit $\xi = [x\ z]^T$ und $\eta = [f\ g]^T$. In dem Vektor $y_{mess}(t)$ sind dabei die tatsächlich gemessenen Größen enthalten, und der Vektor $y_{Beo}(t)$ enthält die entsprechenden mit dem dynamischen Schätzalgorithmus berechneten Größen entsprechend des Messmodells k. Den Rückdrehwinkel bestimmt man durch die Gleichung

$$\phi_{rueck}(t) = c^T \xi,$$

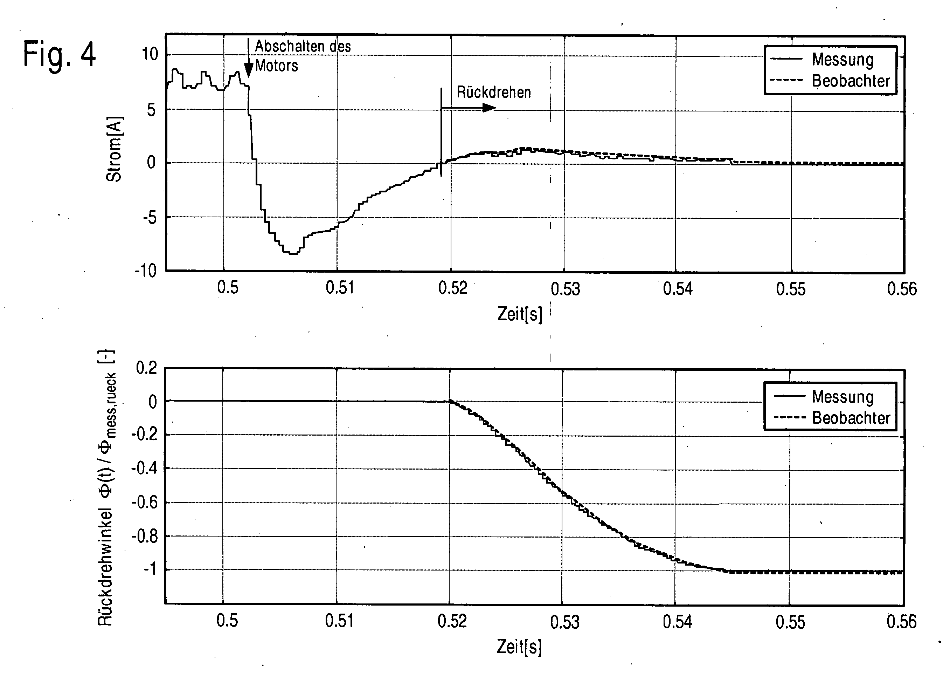

wobei $C = c^T$ die aus der Regelungstechnik bekannte Beobachtungsmatrix darstellt. Bei dem erfindungsgemäßen Verfahren kennzeichnet der Zeitpunkt t=0 in den Schätzgleichungen (\*\*) den Beginn des Rückdrehens, das durch den 2. Nulldurchgang des Stromsignals gekennzeichnet ist, vgl. Figur 4. Dieser Nulldurchgang wird durch eine in der Erfassungseinheit 10 integrierte Logik detektiert und der Schätzalgorithmus des zweiten Beobachters 21 aktiviert.

In Figur 2 ist die prinzipielle Struktur des Beobachter-Entwurfsmodells (\*) abgebildet. Dieses besteht aus dem Motormodell 2a für den Gleichstrommotor, dem Störgrößenmodell 2b zur Berücksichtigung von auftretenden Störgrößen sowie einem Messmodell 2c. Wenn notwendig, ist das Modell zu erweitern, um z.B. mechanische Einflüsse in Getrieben und Strukturen zu berücksichtigen.

Das Blockdiagramm für den grundsätzlichen Aufbau der erfindungsgemäßen Vorrichtung zur Bestimmung des Rückdrehwinkels ist in Figur 3 gezeigt. Diese besteht aus einem Simulatorteil 21a, dem Korrekturterm 21b, einem Messmodel 21c sowie einer Ausgangsgleichung 21d für den geschätzten Rückdrehwinkel $\Phi_{rueck}$. Der Simulatorteil 21a enthält eine Kopie des Beobachter-Entwurfsmodells (\*), diesem wird der entworfene Korrekturterm 21b aufgeschaltet. Mit Hilfe des Korrekturterms 21b wird ein ständiger Vergleich zwischen Messung $y_{mess}$ und Schätzung durchgeführt und ggf. eventuelle Modellunsicherheiten, z.B. Parameterunsicherheiten, kompensiert. Zum Vergleich von Mess- und Schätzgrößen wird weiterhin das Messmodell 21c, entsprechend dem Messmodell 2c, verwendet. Der Verstärkungsfaktor $K$ in dem Korrekturterm 21b wird so entworfen, dass der geschätzte Zustand $\xi$ gegen den tatsächlichen physikalischen Wert konvergiert. Dadurch lässt sich der Rückdrehwinkel $\Phi_{rueck}$ hochgenau rekonstruieren, vgl. Figur 4, und der Schätzfehler $\phi_e$ minimieren. Der gesamte Schätzalgorithmus besitzt dabei die gemessenen Größen Strom und Spannung als Eingangsgrößen, die in Abhängigkeit des Modells entweder als Eingangsgröße $u$ des Simulatorteils 21a oder als Messgröße $y_{mess}$ zu verwenden sind.

Figur 4 zeigt einen Vergleich zwischen dem gemessenen und dem geschätzten Stromsignal sowie des geschätzten Rückdrehwinkels mit dem gemessenen Referenzwinkel. Der Beginn des Rückdrehens des Motors ist durch den zweiten Nulldurchgang des Stromsignals nach dem Abschalten des Motors gekennzeichnet. Der Bereich des Rückdrehens ist für das Stromsignal in Figur 4 oben angegeben.

Das erfindungsgemäß vorgeschlagene System einer sensorlosen Bestimmung des Motordrehwinkels ist nicht nur bei Gleichstrommotoren, sondern auch bei beliebigen anderen Motoren einsetzbar, die eine vergleichbare periodische Modulation des Strom- bzw. Spannungssignals in Abhängigkeit vom Motordrehwinkel zeigen.

Das erfindungsgemäß vorgeschlagene Verfahren und die erfindungsgemäß vorgeschlagene Vorrichtung zur Bestimmung des Rückdrehwinkels sind nicht auf die Anwendung bei Verfahren zur Bestimmung des Motordrehwinkels beschränkt, die auf einer periodischen Modulation des Strom- bzw. Spannungssignals basieren, da hierfür lediglich das Strom- und/oder Spannungssignal nach dem Abschalten des Motors in Bezug auf die Nulldurchgänge nach dem Abschalten und in Bezug auf deren Verhalten bei langsamen und kriechenden Drehbewegungen berücksichtigt werden.

**Patentansprüche**

1. Verfahren zur Bestimmung eines Drehwinkels ($\Phi_b$) eines Elektromotors, wobei die Bestimmung eines Rückdrehwinkels ($\Phi_{rueck}$) des Elektromotors (1) nach dessen Abschalten anhand eines Motorstromsignals ($I_m$) und eines Motorspannungssignals ($U_m$) erfolgt, mit den Schritten:

   - Detektieren eines zweiten Nulldurchgangs des Motorstromsignals ($I_m$) nach dem Abschalten des Elektromotors (1), und
   - Bestimmen des Rückdrehwinkels ($\Phi_{rueck}$) durch eine modellbasierte Auswertung des Motorstromsignals (Im) und des Motorspannungssignals ($U_m$), wobei ein Beginn des Rückdrehens nach dem zweiten Nulldurchgang des Motorstromsignals ($I_m$) nach dem Abschalten des Elektromotors (1) definiert ist.

2. Verfahren nach Anspruch 1, **dadurch gekennzeichnet, dass** der Rückdrehwinkel ($\Phi_{rueck}$) mittels eines Motormodells (2a) und/oder Störgrößenmodells (2b) aus dem Motorstromsignal ($I_m$) und dem Motorspannungssignal ($U_m$) ermittelt wird.

3. Verfahren nach Anspruch 2, **dadurch gekennzeichnet, dass** das Motormodell (2a) und/oder das Störgrößenmodell (2b) über eine Beobachterfunktion (3) optimiert werden.

4. Verfahren nach Anspruch 2 oder 3, **dadurch gekennzeichnet, dass** in das. Motormodell (2a) und/oder in das Störgrößenmodell (2b) ein von dem Elektromotor (1) angetriebenes Getriebe und daran angrenzende Anwendungen einbezogen sind.

5. Verfahren nach einem der Ansprüche 2 bis 4, **dadurch gekennzeichnet, dass** zur Bestimmung der Rückdrehwinkels ($\Phi_{rueck}$) ein Messmodell (21 c, 2c) für eine Messvorrichtung für das Motorstromsignal ($I_m$) und das Motorspannungssignal ($U_m$) einbezogen wird.

6. Verfahren nach einem der vorstehenden Ansprüche, **dadurch gekennzeichnet, dass** das Bestimmen des Rückdrehwinkels ($\Phi_{rueck}$) gestartet wird, nachdem der Elektromotor (1) abgeschaltet wurde.

7. Verfahren nach einem der vorstehenden Ansprüche, **dadurch gekennzeichnet, dass** es verwendet wird, um einen durch Signalauswertung der mechanischen Kommutierungsvorgänge im Motorstromsignal ($I_m$) bestimmten Motordrehwinkel ($\Phi_e$) des Elektromotors (1) zu korrigieren und/oder zu initialisieren.

8. Verfahren nach einem der vorstehenden Ansprüche, **dadurch gekennzeichnet, dass** es in einem Sitzsteuergerät für Autositze und/oder in einem Steuergerät für Schiebedächer, Fensterheber oder Klappensteller eingesetzt wird.

9. Vorrichtung zur Bestimmung eines Drehwinkels ($\Phi_e$) eines Elektromotors (1), aufweisend

   - eine Messlogik (10) zum Detektieren eines zweiten Nulldurchgangs des Motorstromsignals (Im) und des Motorspannungssignals ($U_m$) nach dem Abschalten des Elektromotors (1), und
   - einen Beobachter (21) zum Bestimmen des Rückdrehwinkels ($\Phi_{rueck}$) durch eine modellbasierte Auswertung des Motorstromsignals ($I_m$) und des Motorspannungssignals ($U_m$), wobei ein Beginn des Rückdrehens nach dem zweiten Nulldurchgang des Motorstromsignals ($I_m$) nach dem Abschalten des Elektromotors (1) definiert ist.

10. Vorrichtung nach Anspruch 9, **gekennzeichnet durch** ein Motormodell (2a) und/oder Störgrößenmodell (2b) innerhalb eines Simulatorteils (21 a) des Beobachters (21).

11. Vorrichtung nach Anspruch 10, **gekennzeichnet durch** ein Messmodell (21c) innerhalb des Beobachters (21).

12. Vorrichtung nach einem der Ansprüche 9 bis 11, **gekennzeichnet durch** eine Detektoreinheit (10) zur Bestimmung eines Abschaltens des Elektromotors (1) und zum anschließenden Starten der Bestimmung des Rückdrehwinkels ($\Phi_{rueck}$).

**13.** Vorrichtung nach einem der vorstehenden Ansprüche 9 bis 12, **dadurch gekennzeichnet, dass** sie in ein Sitzsteuergerät für Autositze und/oder in ein Steuergerät für Schiebedächer, Fensterheber oder Klappensteller integriert ist.

**Claims**

**1.** Method for determining a rotation angle ($\Phi_e$) of an electric motor, with a reversing angle ($\Phi_{reverse}$) of the electric motor (1) being determined on the basis of a motor current signal ($I_m$) and a motor voltage signal ($U_m$) after the said electric motor is switched off, comprising the steps of:

- detecting a second zero crossing of the motor current signal ($I_m$) after the electric motor (1) is switched off, and
- determining the reversing angle ($\Phi_{reverse}$) by virtue of a model-based evaluation of the motor current signal ($I_m$) and of the motor voltage signal ($U_m$), with a beginning of the reversing operation being defined after the second zero crossing of the motor current signal ($I_m$) after the electric motor (1) is switched off.

**2.** Method according to Claim 1, **characterized in that** the reversing angle ($\Phi_{reverse}$) is ascertained from the motor current signal ($I_m$) and from the motor voltage signal ($U_m$) by means of a motor model (2a) and/or an interference variable model (2b).

**3.** Method according to Claim 2, **characterized in that** the motor model (2a) and/or the interference variable model (2b) are optimized by means of an observer function (3).

**4.** Method according to Claim 2 or 3, **characterized in that** a gear mechanism, which is driven by the electric motor (1), and applications which adjoin the said gear mechanism are included in the motor model (2a) and/or in the interference variable model (2b).

**5.** Method according to one of Claims 2 to 4, **characterized in that** a measurement model (21c, 2c) for a measurement apparatus for the motor current signal ($I_m$) and the motor voltage signal ($U_m$) is included for the purpose of determining the reversing angle ($\Phi_{reverse}$).

**6.** Method according to one of the preceding claims, **characterized in that** the operation for determining the reversing angle ($\Phi_{reverse}$) is started after the electric motor (1) has been switched off.

**7.** Method according to one of the preceding claims, **characterized in that** it is used in order to correct and/or to initialize a motor rotation angle ($\Phi_e$) of the electric motor (1) which is determined by signal evaluation of the mechanical commutation processes in the motor current signal ($I_m$).

**8.** Method according to one of the preceding claims, **characterized in that** it is used in a seat controller for car seats and/or in a controller for sliding roofs, window lifters or flap actuators.

**9.** Apparatus for determining a rotation angle ($\Phi_e$) of an electric motor (1), having

- a measurement logic system (10) for detecting a second zero crossing of the motor current signal ($I_m$) and of the motor voltage signal ($U_m$) after the electric motor (1) is switched off, and
- an observer (21) for determining the reversing angle ($\Phi_{reverse}$) by virtue of a model-based evaluation of the motor current signal ($I_m$) and of the motor voltage signal ($U_m$), with a beginning of the reversing process being defined after the second zero crossing of the motor current signal ($I_m$) after the electric motor (1) is switched off.

**10.** Apparatus according to Claim 9, **characterized by** a motor model (2a) and/or an interference variable model (2b) within a simulator part (21a) of the observer (21).

**11.** Apparatus according to Claim 10, **characterized by** a measurement model (21c) within the observer (21).

**12.** Apparatus according to one of Claims 9 to 11, **characterized by** a detector unit (10) for determining a switch-off operation of the electric motor (1) and for subsequently starting the process of determining the reversing angle ($\Phi_{reverse}$).

**13.** Apparatus according to one of the preceding Claims 9 to 12, **characterized in that** it is integrated in a seat controller for car seats and/or in a controller for sliding roofs, window lifters or flap actuators.

**Revendications**

**1.** Procédé de détermination d'un angle de rotation ($\Phi_e$) d'un moteur électrique, la détermination d'un angle de rotation en arrière ($\Phi_{rueck}$) du moteur électrique (1) s'effectuant après sa mise hors tension au moyen d'un signal de courant de moteur ($I_m$) et d'un signal de tension de moteur ($U_m$), comprenant les étapes suivantes :

- détection d'un deuxième passage par zéro du signal de courant de moteur ($I_m$) après la mise hors tension du moteur électrique (1) et
- détermination de l'angle de rotation en arrière ($\Phi_{rueck}$) par une interprétation basée sur un modèle du signal de courant de moteur ($I_m$) et du signal de tension de moteur ($U_m$), un début de la rotation en arrière étant défini après le deuxième passage par zéro du signal de courant de moteur ($I_m$) après la mise hors tension du moteur électrique (1).

**2.** Procédé selon la revendication 1, **caractérisé en ce que** l'angle de rotation en arrière ($\Phi_{rueck}$) est déterminé au moyen d'un modèle de moteur (2a) et/ou d'un modèle de grandeur perturbatrice (2b) à partir du signal de courant de moteur ($I_m$) et du signal de tension de moteur ($U_m$).

**3.** Procédé selon la revendication 2, **caractérisé en ce que** le modèle de moteur (2a) et/ou le modèle de grandeur perturbatrice (2b) sont optimisés par le biais d'une fonction d'observateur (3).

**4.** Procédé selon la revendication 2 ou 3, **caractérisé en ce que** dans le modèle de moteur (2a) et/ou dans le modèle de grandeur perturbatrice (2b) sont inclus un engrenage entraîné par le moteur électrique (1) et les applications qui s'y rattachent.

**5.** Procédé selon l'une des revendications 2 à 4, **caractérisé en ce qu'**un modèle de mesure (21c, 2c) pour un dispositif de mesure du signal de courant de moteur ($I_m$) et du signal de tension de moteur ($U_m$) intervient pour la détermination de l'angle de rotation en arrière ($\Phi_{rueck}$) .

**6.** Procédé selon l'une des revendications précédentes, **caractérisé en ce que** la détermination de l'angle de rotation en arrière ($\Phi_{rueck}$) démarre après avoir mis le moteur électrique (1) hors tension.

**7.** Procédé selon l'une des revendications précédentes, **caractérisé en ce qu'**il est utilisé pour corriger et/ou pour initialiser un angle de rotation de moteur ($\Phi_e$) du moteur électrique (1), déterminé par interprétation du signal des opérations de commutation mécaniques dans le signal de courant de moteur ($I_m$).

**8.** Procédé selon l'une des revendications précédentes, **caractérisé en ce qu'**il est utilisé dans un appareil de commande de siège pour les sièges de voiture et/ou dans un appareil de commande pour toits ouvrants, lève-vitres ou actionneurs de trappe.

**9.** Dispositif pour déterminer un angle de rotation ($\Phi_e$) d'un moteur électrique (1), présentant

- une logique de mesure (10) pour détecter un deuxième passage par zéro du signal de courant de moteur ($I_m$) et du signal de tension de moteur ($U_m$) après la mise hors tension du moteur électrique (1) et
- un observateur (21) pour déterminer l'angle de rotation en arrière ($\Phi_{rueck}$) par une interprétation basée sur un modèle du signal de courant de moteur ($I_m$) et du signal de tension de moteur ($U_m$), un début de la rotation en arrière étant défini après le deuxième passage par zéro du signal de courant de moteur ($I_m$) après la mise hors tension du moteur électrique (1).

**10.** Dispositif selon la revendication 9, **caractérisé par** un modèle de moteur (2a) et/ou un modèle de grandeur perturbatrice (2b) à l'intérieur d'une partie simulateur (21a) de l'observateur (21).

**11.** Dispositif selon la revendication 10, **caractérisé par** un modèle de mesure (21c) à l'intérieur de l'observateur (21).

**12.** Dispositif selon l'une des revendications 9 à 11, **caractérisé par** une unité de détection (10) pour déterminer une mise hors tension du moteur électrique (1) et pour ensuite démarrer la détermination de l'angle de rotation en arrière ($\Phi_{rueck}$).

13. Dispositif selon l'une des revendications précédentes 9 à 12, **caractérisé en ce qu'**il est intégré dans un appareil de commande de siège pour les sièges de voiture et/ou dans un appareil de commande pour toits ouvrants, lève-vitres ou actionneurs de trappe.

Fig. 1

## Fig. 2

Beobachter-Entwurfsmodell

$z_0$

2b

Störgrößenmodell
$\dot{z} = g(x, z)$

3

$x_0$

$x$

$z$

2a

2c

Eingangs-vektor
$u$

Motor-Modell
$\dot{x} = f(x, z, u)$

$x$

Mess-Modell
$h(x)$

Ausgangs-vektor
$y$

## Fig. 3

1

M

$U_M$

$U_m$

$u$

21a

$\Phi_{rueck}$

$U_{batt}$

ADC, Vorver-arbeitung

Simulatorteil

C

$R$ | $U_R$

Messmodell

21d

21c

Korrekturterm

−
+

21b

$y_{mess}$

9

analog

10

digital

$I_m$

21

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10028033
- DE 10028035
- DE 10028041
- US 20030111996 A
- DE 19729238 C1

- DE 19925327 A1
- WO 2006069635 A
- EP 1659683 A1
- WO 2006069635 A3

**In der Beschreibung aufgeführte Nicht-Patentliteratur**

- **O. FÖLLINGER.** Regelungstechnik: Einführung in die Methoden und ihrer Anwendung. Hüthig GmbH, 1994

- **H. UNBEHAUEN.** Klassische Verfahren zur Analyse und Synthese linearer kontinuierlicher Regelsysteme. Fuzzy-Regelsysteme, 2002, vol. 1